# EUROPÄISCHE PATENTSCHRIFT

(11) **EP 3 898 076 B1**
(45) Veröffentlichungstag und Bekanntmachung des Hinweises auf die Patenterteilung: **24.09.2025**
(21) Anmeldenummer: 19809772.7
(22) Anmeldetag: 25.11.2019
(51) Int. Cl.: B23Q 11/00, B25F 5/00

(54) **VERFAHREN FÜR DEN BETRIEB EINER HANDWERKZEUGMASCHINE IN VERBINDUNG MIT EINER STAUBAUFFANGVORRICHTUNG**
METHOD OF OPERATING A HAND TOOL WITH A DUST COLLECTING DEVICE
PROCÉDÉ DE FONCTIONNEMENT D'UNE MACHINE-OUTIL EN LIAISON AVEC UN DISPOSITIF DE COLLECTE DES POUSSIÈRES

(30) Priorität: 21.12.2018 DE 102018222772
(43) Veröffentlichungstag der Anmeldung: 27.10.2021
(73) Patentinhaber: Robert Bosch GmbH, 70442 Stuttgart (DE)
(72) Erfinder: INDINO, Ruggero, 70180 Stuttgart (DE); ESENWEIN, Florian, 70771 Leinfelden-Echterdingen (DE)
(86) Internationale Anmeldenummer: PCT/EP2019/082373
(87) Internationale Veröffentlichungsnummer: WO 2020/126320

(56) Entgegenhaltungen:
- EP-A1- 3 311 951
- DE-A1- 102012 224 429
- DE-A1- 102015 225 365
- DE-A1- 102017 131 456

## Beschreibung

### Stand der Technik

Es sind bereits Verfahren zum Betrieb eines Systems mit einer abnehmbaren Staubauffangvorrichtungen, insbesondere abnehmbare Staubauffangbehälter, für Handwerkzeugmaschinen bekannt, wobei die Staubauffangvorrichtungen zumindest eine Grundstruktur umfassen, die zumindest einen Rahmen zu einer Aufnahme eines formvariablen Auffangbeutels aufweist oder selbst zumindest teilweise ein Auffangvolumen begrenzt, wobei die Grundstruktur zumindest einen Verbindungsstutzen zu einer Verbindung mit einem Ausblasstutzen der Handwerkzeugmaschinen aufweist, mittels deren die Grundstruktur abnehmbar an der Handwerkzeugmaschine anordenbar ist. Ein entsprechendes Verfahren nach dem Oberbegriff des Anspruchs 1 ist bereits aus der DE 10 2017 131456 A1 bekannt.

### Offenbarung der Erfindung

Die Erfindung geht aus von einem Verfahren zum Betrieb eines Systems gemäß Anspruch 1.

Es wird vorgeschlagen, dass die abnehmbare Staubauffangvorrichtung zumindest eine, insbesondere drahtlose, Kommunikationseinheit zu einem Austausch von, insbesondere elektronischen, Daten mit zumindest einer externen Einheit, insbesondere der Handwerkzeugmaschine oder einem mobilen Kommunikationsgerät umfasst. Die Kommunikationseinheit der Staubauffangvorrichtung ist vorzugsweise als kabellose Kommunikationseinheit ausgebildet. Die Kommunikationseinheit der Staubauffangvorrichtung kann als WLAN-Kommunikationseinheit, als Bluetooth-Kommunikationseinheit, als Funk-Kommunikationseinheit, als RFID-Kommunikationseinheit, als NFC-Einheit, als Infrarot-Kommunikationseinheit, als Mobilfunknetz-Kommunikationseinheit o. dgl. ausgebildet sein. Besonders bevorzugt ist die Kommunikationseinheit der Staubauffangvorrichtung zu einer bidirektionalen Datenübertragung vorgesehen. Alternativ oder zusätzlich ist die Kommunikationseinheit der Staubauffangvorrichtung als kabelgebundene Kommunikationseinheit ausgebildet, wie beispielsweise als LAN-Kommunikationseinheit, als USB-Kommunikationseinheit o. dgl. Bei einer Ausgestaltung der externen Einheit als mobiles Kommunikationsgerät ist die externe Einheit vorzugsweise als Smartphone, als Tablet, als PDA o. dgl. ausgebildet. Vorzugsweise umfasst die als mobiles Kommunikationsgerät ausgebildete externe Einheit eine App zu einer Kommunikation mit der Kommunikationseinheit. Es ist jedoch auch denkbar, dass die externe Einheit als externe Speicher- und Recheneinheit, wie beispielsweise als Server, als Firmenzentrale, als PC o. dgl. ausgebildet ist.

Die Staubauffangvorrichtung ist vorzugsweise frei von einer Antriebseinheit, insbesondere einer Elektromotoreinheit, ausgebildet. Bevorzugt ist die Staubauffangvorrichtung verschieden von einem, insbesondere mobilen, Staubsauger ausgebildet. Insbesondere ist die Staubauffangvorrichtung als Staubbeutelvorrichtung, als Absaugglockenvorrichtung, als Staubboxvorrichtung o. dgl. ausgebildet. Die Staubauffangvorrichtung kann eine Filtereinheit aufweisen, die an der Grundstruktur, insbesondere auswechselbar, angeordnet ist. Es ist jedoch auch denkbar, dass die Staubauffangvorrichtung frei von einer Filtereinheit ausgebildet ist und insbesondere ein Auffangbeutel, beispielsweise ein Gewebe- oder Vliesauffangbeutel o. dgl., der an der Grundstruktur, insbesondere auswechselbar, anordenbar ist, eine Filterfunktion aufweist.

Bei einer Ausgestaltung der Staubauffangvorrichtung, bei der die Grundstruktur den Rahmen zu einer Aufnahme eines formvariablen Auffangbeutels, beispielsweise ein Gewebe- oder Vliesauffangbeutel o. dgl., umfasst, ist der Rahmen der Grundstruktur vorzugsweise derart ausgebildet, dass der Auffangbeutel in einem an der Grundstruktur angeordneten Zustand mittels des Rahmens gespannt und/oder gehalten wird. Der Rahmen ist bevorzugt angrenzend an den Verbindungsstutzen der Grundstruktur angeordnet. Vorzugsweise ist der Rahmen einteilig mit dem Verbindungsstutzen ausgebildet. Unter "einteilig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Bei einer Ausgestaltung der Staubauffangvorrichtung, bei der die Grundstruktur selbst zumindest teilweise ein Auffangvolumen zu einem Auffangen von Staub, insbesondere von durch einen mittels der Handwerkzeugmaschine erzeugten Werkstückabtrag hervorgerufenen Staub, begrenzt, umfasst die Grundstruktur vorzugsweise einen, insbesondere zylinderförmigen oder polygonalen, Auffangbehälter, der ein Auffangvolumen begrenzt. Der Auffangbehälter ist vorzugsweise angrenzend an den Verbindungsstutzen der Grundstruktur angeordnet. Vorzugsweise ist der Auffangbehälter einteilig mit dem Verbindungsstutzen ausgebildet. Bei einer Ausgestaltung der Staubauffangvorrichtung, bei der die Grundstruktur selbst, insbesondere der Auffangbehälter der Grundstruktur, zumindest teilweise ein Auffangvolumen begrenzt, umfasst die Grundstruktur vorzugsweise ein Verschlusselement, insbesondere einen abnehmbaren Deckel, oder eine Verbindungseinheit zumindest zu einer lösbaren Verbindung des Auffangbehälters und des Verbindungsstutzens. Die Grundstruktur kann weitere, einem Fachmann als sinnvoll erscheinende Ausgestaltungen aufweisen, die dazu geeignet sind, einen formvariablen Auffangbeutel aufzunehmen oder die selbst ein Auffangvolumen begrenzen.

Vorzugsweise ist die, insbesondere drahtlose, Kommunikationseinheit der Staubauffangvorrichtung dazu vorgesehen, insbesondere elektronische, Daten mit der zumindest einen externen Einheit, insbesondere der Handwerkzeugmaschine oder einem mobilen Kommunikationsgerät, auszutauschen, um einen angeordneten Zustand der Staubauffangvorrichtung an der Handwerkzeugmaschine, insbesondere an dem Ausblasstutzen der Handwerkzeugmaschine, zu überwachen, zu signalisieren oder zu übertragen. Beispielsweise ist denkbar, dass ein Abstand der Staubauffangvorrichtung relativ zur Handwerkzeugmaschine an die externe Einheit übertragen wird, dass ein Kontakt der Staubauffangvorrichtung mit der Handwerkzeugmaschine, insbesondere mit dem Ausblasstutzen der Handwerkzeugmaschine, ausgewertet wird und an die externe Einheit übertragen wird, dass ein Vergleich von Kenngrößen erfolgt, insbesondere eine Vibration der Handwerkzeugmaschine mit einer Vibration der Staubauffangvorrichtung vergleichen wird, oder dass andere Kenngrößen erfasst und/oder ausgewertet werden und an die externe Einheit übertragen werden. Es ist alternativ oder zusätzlich denkbar, dass spezifische Daten, wie beispielsweise eine Seriennummer, eine Auffangvolumengröße, eine Zuordnungskenngröße o. dgl. der Staubauffangvorrichtung mittels der, insbesondere drahtlosen, Kommunikationseinheit der Staubauffangvorrichtung an die externe Einheit übertragbar sind. Vorzugsweise ist eine Steuerung oder Regelung der Handwerkzeugmaschine abhängig von einem Austausch von, insbesondere elektronischen, Daten zwischen der, insbesondere drahtlosen, Kommunikationseinheit der Staubauffangvorrichtung und der externen Einheit. Unter "vorgesehen" soll insbesondere speziell eingerichtet, speziell programmiert, speziell ausgelegt und/oder speziell ausgestattet verstanden werden. Darunter, dass ein Element und/oder eine Einheit zu einer bestimmten Funktion vorgesehen ist, soll insbesondere verstanden werden, dass das Element und/oder die Einheit diese bestimmte Funktion in zumindest einem Anwendungs- und/oder Betriebszustand erfüllen/erfüllt und/oder ausführen/ausführt.

Mittels einer Ausgestaltung kann vorteilhaft eine Übertragung von Daten zwischen der Staubauffangvorrichtung und der externen Einheit ermöglicht werden, die für einen sicheren Betrieb der Handwerkzeugmaschine sinnvoll sind. Es kann, insbesondere infolge einer Übertragung von Daten, vorteilhaft eine Überwachung einer korrekten Anordnung der Staubauffangvorrichtung an der Handwerkzeugmaschine ermöglicht werden. Es kann vorteilhaft eine hohe Sicherheit, insbesondere eine hohe Sicherheit gegen ein Einatmen von Staub, eines Bedieners einer Handwerkzeugmaschine, an der die erfindungsgemäße Staubauffangvorrichtung angeordnet ist, erreicht werden, insbesondere da vorteilhaft eine Überwachung einer Anordnung der Staubauffangvorrichtung an der Handwerkzeugmaschine ermöglicht werden kann. Es kann vorteilhaft eine Möglichkeit geschaffen werden, einen Bediener, insbesondere automatisch, darüber zu informieren, dass die Staubauffangvorrichtung inkorrekt an der Handwerkzeugmaschine angeordnet ist.

Des Weiteren wird vorgeschlagen, dass die abnehmbare Staubauffangvorrichtung zumindest eine Erfassungseinheit umfasst, die zumindest einen Bewegungssensor zu einer Erfassung von zumindest einer Bewegungskenngröße, insbesondere einer Vibration, der Grundstruktur aufweist, wobei die zumindest eine erfasste Bewegungskenngröße mittels der Kommunikationseinheit an die zumindest eine externe Einheit übertragbar ist. Unter einer "Erfassungseinheit" soll insbesondere eine Einheit verstanden werden, die dazu vorgesehen ist, zumindest eine Kenngröße und/oder eine physikalische Eigenschaft aufzunehmen, wobei die Aufnahme aktiv, wie insbesondere durch Erzeugen und Aussenden eines elektrischen Messsignals, und/oder passiv, wie insbesondere durch eine Erfassung von Eigenschaftsänderungen eines Sensorbauteils, stattfinden kann. Es sind verschiedene, einem Fachmann als sinnvoll erscheinende Erfassungseinheiten denkbar. Der Bewegungssensor ist vorzugsweise als, insbesondere mehrachsiger, Beschleunigungssensor ausgebildet. Es ist jedoch auch denkbar, dass der Bewegungssensor eine andere, einem Fachmann als sinnvoll erscheinende Ausgestaltung aufweist, wie beispielsweise eine Ausgestaltung als Vibrationssensor, wie beispielsweise ein Piezo-Vibrationssensor o. dgl., als Neigungs- und Vibrationssensor, als Schwingungssensor o. dgl. Die Erfassungseinheit ist vorzugsweise mittels Signalleitungen mit der Kommunikationseinheit der Staubauffangvorrichtung zu einem Austausch von, insbesondere elektronischen, Daten verbunden. Es ist denkbar, dass die Erfassungseinheit direkt mit der Kommunikationseinheit verbunden ist oder indirekt über eine Steuer- und/oder Regeleinheit der Staubauffangvorrichtung. Unter einer "Steuer- und/oder Regeleinheit" soll insbesondere eine Einheit mit zumindest einer Steuerelektronik verstanden werden. Unter einer "Steuerelektronik" soll insbesondere eine Einheit mit einer Prozessoreinheit und mit einer Speichereinheit sowie mit einem in der Speichereinheit gespeicherten Betriebsprogramm verstanden werden. Bevorzugt ist der Bewegungssensor dazu vorgesehen, Bewegungen der Staubauffangvorrichtung zu erfassen. Bevorzugt ist der Bewegungssensor dazu vorgesehen, von der Handwerkzeugmaschine während eines Betriebs der Handwerkzeugmaschine auf die Staubauffangvorrichtung, insbesondere zumindest auf die Grundstruktur, übertragene Vibrationen zu erfassen. Alternativ oder zusätzlich ist es denkbar, dass der Bewegungssensor dazu vorgesehen ist, Bewegungen der Staubauffangvorrichtung, insbesondere der Grundstruktur, im Raum zu erfassen. Mittels der erfindungsgemäßen Ausgestaltung kann konstruktiv einfach eine Erfassung von Bewegungsdaten ermöglicht werden, die an die externe Einheit übertragbar sind. Es kann vorteilhaft eine Übertragung von Bewegungsdaten zwischen der Staubauffangvorrichtung und der externen Einheit ermöglicht werden, die für einen sicheren Betrieb der Handwerkzeugmaschine sinnvoll sind. Es kann, insbesondere infolge einer Übertragung von Bewegungsdaten, vorteilhaft eine Überwachung einer korrekten Anordnung der Staubauffangvorrichtung an der Handwerkzeugmaschine ermöglicht werden.

Ferner wird vorgeschlagen, dass die abnehmbare Staubauffangvorrichtung zumindest eine, insbesondere die zuvor genannte, Erfassungseinheit umfasst, die zumindest einen Bewegungssensor zu einer Erfassung von zumindest einer Bewegungskenngröße, insbesondere einer Vibration, der Grundstruktur aufweist, wobei die Kommunikationseinheit und die Erfassungseinheit zumindest in einem Nahbereich des Verbindungsstutzens, insbesondere in einem Nahbereich einer Eingangsöffnung des Verbindungsstutzens, der Grundstruktur angeordnet sind. Unter einem "Nahbereich" soll insbesondere ein Bereich verstanden werden, der relativ zu anderen Elementen, Einheiten und/oder weiteren Bereichen, insbesondere in unmittelbarer Nachbarschaft angeordnete Elemente, Einheiten und/oder weitere Bereiche, einen maximalen Abstand aufweist, der insbesondere kleiner ist als 20 cm, bevorzugt kleiner ist als 15 cm, besonders bevorzugt kleiner ist als 10 cm und ganz besonders bevorzugt kleiner ist als 5 cm. Vorzugsweise ist die Erfassungseinheit, insbesondere der Bewegungssensor, an einer Außenseite des Verbindungsstutzens angeordnet. Alternativ oder zusätzlich ist jedoch auch denkbar, dass die Erfassungseinheit, insbesondere zumindest ein Sensor der Erfassungseinheit, an einer anderen, einem Fachmann als sinnvoll erscheinenden Position der Grundstruktur angeordnet ist. Mittels der erfindungsgemäßen Ausgestaltung können vorteilhaft, insbesondere in einem an der Handwerkzeugmaschine angeordneten Zustand der Staubauffangvorrichtung, zuverlässig Bewegungen der Staubauffangvorrichtung, insbesondere durch einen Betrieb der Handwerkzeugmaschine bedingte und auf die Staubauffangvorrichtung wirkende Bewegungen, erfasst werden. Es kann konstruktiv einfach eine Erfassung von Bewegungsdaten ermöglicht werden, die an die externe Einheit übertragbar sind. Es kann vorteilhaft eine Übertragung von Bewegungsdaten zwischen der Staubauffangvorrichtung und der externen Einheit ermöglicht werden, die für einen sicheren Betrieb der Handwerkzeugmaschine sinnvoll sind.

Zudem wird vorgeschlagen, dass die abnehmbare Staubauffangvorrichtung zumindest eine, insbesondere die zuvor genannte, Erfassungseinheit umfasst, die zumindest einen Fluidstromsensor zu einer Erfassung von zumindest einer Fluidkenngröße aufweist, der zu einer Erfassung eines durch den Verbindungsstutzen strömenden Fluidstroms an dem Verbindungsstutzen der Grundstruktur angeordnet ist, wobei die zumindest eine erfasste Fluidkenngröße mittels der Kommunikationseinheit an die zumindest eine externe Einheit übertragbar ist. Bevorzugt ist der zumindest eine Fluidstromsensor derart an dem Verbindungsstutzen angeordnet, dass mittels des Fluidstromsensors ein durch den Verbindungsstutzen strömender Fluidstrom, insbesondere ein durch die Handwerkzeugmaschine erzeugter und zumindest in einem an der Handwerkzeugmaschine angeordneten Zustand der Staubauffangvorrichtung durch den Verbindungsstutzen strömender Abluftstrom, erfassbar ist. Vorzugsweise ragt der zumindest eine Fluidstromsensor zumindest teilweise in einen durch den Verbindungsstutzen begrenzten Führungskanal hinein. Es ist jedoch auch denkbar, dass der zumindest eine Fluidstromsensor zumindest teilweise in einen am Verbindungsstutzen angeordneten Bypass hineinragt oder in diesem Bypass angeordnet ist oder dass der zumindest eine Fluidstromsensor vollständig in dem durch den Verbindungsstutzen begrenzten Führungskanal angeordnet ist. Weitere, einem Fachmann als sinnvoll erscheinende Anordnungen des zumindest einen Fluidstromsensors zu einer Erfassung eines durch den Verbindungsstutzen strömenden Fluidstroms sind ebenfalls denkbar. Mittels der erfindungsgemäßen Ausgestaltung kann vorteilhaft konstruktiv einfach eine Erfassung von Strömungsdaten ermöglicht werden, die an die externe Einheit übertragbar sind. Es kann vorteilhaft eine Übertragung von Strömungsdaten zwischen der Staubauffangvorrichtung und der externen Einheit ermöglicht werden, die für einen sicheren Betrieb der Handwerkzeugmaschine sinnvoll sind. Es kann, insbesondere infolge einer Übertragung von Strömungsdaten, vorteilhaft eine Überwachung einer korrekten Anordnung der Staubauffangvorrichtung an der Handwerkzeugmaschine ermöglicht werden.

Des Weiteren wird vorgeschlagen, dass die abnehmbare Staubauffangvorrichtung zumindest ein, insbesondere abnehmbar an der Grundstruktur angeordnetes, Modulgehäuse und zumindest eine, insbesondere die zuvor genannte, Erfassungseinheit umfasst, die zusammen mit der Kommunikationseinheit in dem an der Grundstruktur angeordneten Modulgehäuse angeordnet ist. Vorzugsweise sind alle Komponenten der Erfassungseinheit und der Kommunikationseinheit der Staubauffangvorrichtung in dem Modulgehäuse angeordnet. Bevorzugt umfasst die Staubauffangvorrichtung zumindest eine Energiespeichereinheit zu einer Energieversorgung von elektrischen und/oder elektronischen Komponenten der Staubauffangvorrichtung, insbesondere zumindest der Kommunikationseinheit und/oder der Erfassungseinheit. Die Energiespeichereinheit ist vorzugsweise als Akku ausgebildet. Alternativ oder zusätzlich umfasst die Staubauffangvorrichtung zumindest eine Energieumwandlungseinheit, insbesondere eine Energy-Harvesting-Einheit, mittels derer mechanische Bewegungen und/oder Licht in elektrische Energie umwandelbar ist. Bevorzugt ist die Energieumwandlungseinheit leitend mit der Energiespeichereinheit verbunden, insbesondere zu einer Speicherung von umgewandelter Energie. Es ist jedoch auch alternativ oder zusätzlich denkbar, dass die Staubauffangvorrichtung infolge einer Verbindung mit Handwerkzeugmaschine, insbesondere kontaktfrei oder kontaktgebunden, mit elektrischer Energie versorgbar ist. Bevorzugt ist die Energiespeichereinheit am, insbesondere im, Modulgehäuse angeordnet, insbesondere auswechselbar am Modulgehäuse angeordnet. Vorzugsweise ist das Modulgehäuse an der Grundstruktur, insbesondere am Verbindungsstutzen, anordenbar. Es ist jedoch auch denkbar, dass das Modulgehäuse an einer anderen, einem Fachmann als sinnvoll erscheinenden Position anordenbar ist. Vorzugsweise umfasst die Staubauffangvorrichtung zumindest eine Fixiereinheit, mittels derer das Modulgehäuse abnehmbar an der Grundstruktur anordenbar ist. Die Fixiereinheit ist vorzugsweise zu einer kraft- und/oder formschlüssigen und/oder einer magnetischen Verbindung mit dem Modulgehäuse vorgesehen. Die Fixiereinheit kann beispielsweise zumindest ein Rastelement, einen Bajonettverschluss, einen Gurt, ein Magnet oder andere, einem Fachmann als sinnvoll erscheinende Fixierelemente oder Fixierstrukturen zu einer Fixierung des Modulgehäuses an der Grundstruktur aufweisen. Alternativ ist auch denkbar, dass das Modulgehäuse, insbesondere zumindest teilweise, einteilig mit der Grundstruktur, insbesondere dem Verbindungsstutzen, ausgebildet ist. Mittels der erfindungsgemäßen Ausgestaltung kann vorteilhaft eine sichere Anordnung der Erfassungseinheit und der Kommunikationseinheit an der Grundstruktur ermöglicht werden. Es kann vorteilhaft eine flexible Anordnung des Modulgehäuses an der Grundstruktur erreicht werden. Es kann vorteilhaft ein modularer Aufbau realisiert werden, insbesondere zu einer Nachrüstung von einzelnen Komponenten sowie auch einer Nachrüstung von bekannten Staubauffangvorrichtungen, die frei von einer Kommunikationseinheit und einer Erfassungseinheit ausgebildet sind. Es kann vorteilhaft konstruktiv einfach eine Erfassung von Daten ermöglicht werden, die an die externe Einheit übertragbar sind. Es kann vorteilhaft eine Übertragung von Daten zwischen der Staubauffangvorrichtung und der externen Einheit ermöglicht werden, die für einen sicheren Betrieb der Handwerkzeugmaschine sinnvoll sind. Es kann, insbesondere infolge einer Übertragung von Daten, vorteilhaft eine Überwachung einer korrekten Anordnung der Staubauffangvorrichtung an der Handwerkzeugmaschine ermöglicht werden.

Ferner wird ein System mit zumindest einer erfindungsgemäßen abnehmbaren Staubauffangvorrichtung und mit zumindest einer Handwerkzeugmaschine, an der die Staubauffangvorrichtung abnehmbar anordenbar ist, vorgeschlagen, wobei die Handwerkzeugmaschine zumindest eine, insbesondere drahtlose, Kommunikationseinheit aufweist. Vorzugsweise weist die, insbesondere drahtlose, Kommunikationseinheit der Handwerkzeugmaschine, insbesondere in Bezug auf einen Kommunikationsstandard, eine analoge Ausgestaltung zur, insbesondere drahtlosen, Kommunikationseinheit der Staubauffangvorrichtung auf. Die Kommunikationseinheit der Handwerkzeugmaschine ist vorzugsweise als kabellose Kommunikationseinheit ausgebildet. Die Kommunikationseinheit der Handwerkzeugmaschine kann als WLAN-Kommunikationseinheit, als Bluetooth-Kommunikationseinheit, als Funk-Kommunikationseinheit, als RFID-Kommunikationseinheit, als NFC-Einheit, als Infrarot-Kommunikationseinheit, als Mobilfunknetz-Kommunikationseinheit o. dgl. ausgebildet sein. Besonders bevorzugt ist die Kommunikationseinheit der Handwerkzeugmaschine zu einer bidirektionalen Datenübertragung vorgesehen. Alternativ oder zusätzlich ist die Kommunikationseinheit der Handwerkzeugmaschine als kabelgebundene Kommunikationseinheit ausgebildet, wie beispielsweise als LAN-Kommunikationseinheit, als USB-Kommunikationseinheit o. dgl.

Unter einer "Handwerkzeugmaschine" soll insbesondere eine Werkzeugmaschine zu einer Bearbeitung von Werkstücken verstanden werden, die von einem Bediener transportmaschinenlos transportiert werden kann. Die tragbare Werkzeugmaschine weist insbesondere eine Masse auf, die kleiner ist als 40 kg, bevorzugt kleiner ist als 10 kg und besonders bevorzugt kleiner ist als 5 kg. Die Handwerkzeugmaschine kann als Kreissäge, als Stichsäge, als Hobelmaschine, als Oberfräse, als Schleifmaschine, als Bohrmaschine, als Bohr- und/oder Mei-ßelhammer, als Fensterfräse oder als eine andere, einem Fachmann als sinnvoll erscheinende Handwerkzeugmaschine ausgebildet sein. Bevorzugt umfasst die Handwerkzeugmaschine zumindest einen Ausblasstutzen, mittels dessen auf eine, einem Fachmann bereits bekannte Art und Weise Staub, insbesondere durch einer Bearbeitung eines Werkstücks hervorgerufener Staub, wie beispielsweise Werkstückabtragstaub, von einem Bereich eines an einer Werkzeugaufnahme der Handwerkzeugmaschine angeordneten Bearbeitungswerkzeugs abführbar ist.

Vorzugsweise kann eine Inbetriebnahme der Handwerkzeugmaschine durch ein Betätigen eines Schalters der Handwerkzeugmaschine, ein Fließen von Strom, ein Drehen einer Elektromotoreinheit der Handwerkzeugmaschine, ein Erfassen von Vibrationen der Handwerkzeugmaschine erkannt werden. Insbesondere die Vibrationen der Handwerkzeugmaschine werden auf mit der Handwerkzeugmaschine verbundene Vorrichtungen/Einheiten/Elemente, wie beispielsweise auf die mit der Handwerkzeugmaschine verbundene Staubauffangvorrichtung, übertragen. Die Erfassungseinheit der Staubauffangvorrichtung kann insbesondere diese übertragenen Vibrationen erfassen. Vorzugsweise können erfasste Vibrationen mittels der Kommunikationseinheit der Staubauffangvorrichtung an die externe Einheit, insbesondere an die Handwerkzeugmaschine oder das mobile Kommunikationsgerät, insbesondere ein Smartphone, übertragen werden. Es ist vorgesehen, dass eine Elektronikeinheit der externen Einheit, insbesondere der Handwerkzeugmaschine und/oder des mobilen Kommunikationsgeräts, die mittels der Erfassungseinheit der Staubauffangvorrichtung erfassten Vibrationen auswertet, um zu vergleichen, ob die Staubauffangvorrichtung analog zur Handwerkzeugmaschine vibriert. Entsprechend ist eine Steuerung oder Regelung der Elektromotoreinheit der der Handwerkzeugmaschine abhängig von einem Vergleich der Vibrationen der Handwerkzeugmaschine und den Vibrationen der Staubauffangvorrichtung. Wird beispielsweise erkannt, dass die Staubauffangvorrichtung analoge Vibrationen erfährt wie die Handwerkzeugmaschine, wird erkannt, dass die Staubauffangvorrichtung an der Handwerkzeugmaschine angeordnet ist und ein Betrieb der Handwerkzeugmaschine fortgesetzt werden kann. Wird beispielsweise erkannt, dass die Staubauffangvorrichtung keine Vibrationen erfährt oder unterschiedliche Vibrationen erfährt wie die Handwerkzeugmaschine, wird erkannt, dass die Staubauffangvorrichtung entkoppelt von der Handwerkzeugmaschine angeordnet ist und ein Betrieb der Handwerkzeugmaschine unterbrochen wird. Beispielsweise ist auch denkbar, dass eine Inbetriebnahme der Handwerkzeugmaschine in Abhängigkeit von einer Abweichung von einem Grenzwert von verglichenen Daten unterbunden wird oder dass bei einem Nichtvorliegen von Daten der Staubauffangvorrichtung eine Anzahl von Inbetriebnahmen der Handwerkzeugmaschine begrenzt wird. Beispielsweise ist denkbar, dass nach einer Inbetriebnahme der Handwerkzeugmaschine und einem Nichtvorliegen von Daten der Staubauffangvorrichtung eine Anzahl von weiteren Inbetriebnahmen der Handwerkzeugmaschine auf insbesondere weniger als 30, bevorzugt auf weniger als acht und besonders bevorzugt auf weniger als drei Inbetriebnahmen begrenzt wird. Eine Begrenzung einer Anzahl von Inbetriebnahmen der Handwerkzeugmaschine kann beispielsweise durch ein Ablaufen eines internen Timers zurückgesetzt oder aufgehoben werden oder durch einen Administrator zurückgesetzt oder aufgehoben werden. Beispielsweise ist es denkbar, dass nach Ablaufen eines Timers von zwölf Stunden o. dgl. eine Begrenzung einer Anzahl von Inbetriebnahmen der Handwerkzeugmaschine zurückgesetzt oder aufgehoben wird. Vorzugsweise umfasst die Handwerkzeugmaschine oder das mobile Kommunikationsgerät zumindest eine optische, akustische und/oder haptische Ausgabeeinheit, wie beispielsweise ein Display, ein Lautsprecher, eine Vibrationseinheit o. dgl., die dazu vorgesehen ist, in Abhängigkeit von den übertragenen, insbesondere elektronischen, Daten, eine Information an einen Bediener auszugeben. Beispielsweise ist denkbar, dass ein Bediener mittels der Ausgabeeinheit darauf aufmerksam gemacht werden kann, dass die Staubauffangvorrichtung nicht an der Handwerkzeugmaschine angeordnet ist. Des Weiteren umfasst die Handwerkzeugmaschine oder das mobile Kommunikationsgerät vorzugsweise zumindest eine Eingabeeinheit zu einer Eingabe von Bedienerbefehlen. Die Eingabeeinheit kann einteilig mit der Ausgabeeinheit ausgebildet sein, insbesondere bei einer Ausbildung der Eingabeeinheit als berührungsempfindliches Display o. dgl. Mittels der Eingabeeinheit kann beispielsweise einem Bediener die Möglichkeit gegeben werden, über eine Over-Write Funktion die Handwerkzeugmaschine bei einem Unterbleiben einer Übertragung von Daten oder bei einer Abweichung eines Vergleichs von Daten für eine bestimmte Zeit zu betreiben. Insbesondere ist die Over-Write Funktion in einem Gerätespeicher der Handwerkzeugmaschine oder in einer Datenbank gespeichert oder speicherbar und kann mit weitern Daten wie beispielsweise einer Bediener-ID, einem Datum, einer Zeit, einem Ort verknüpft und/oder abgeglichen werden, wobei eine Freigabe in Abhängigkeit von einer Kombination der oben genannten Daten erfolgen kann. Die Over-Write Funktion kann an bestimmte Berechtigungen gekoppelt sein, so dass nur bestimmte Bediener diese Funktion abrufen können.

Ferner ist es auch denkbar, dass mittels der Erfassungseinheit der Staubauffangvorrichtung eine Füllmenge oder eine Entleerung des Auffangbeutels oder des Auffangvolumens erfassbar ist, wie beispielsweise durch eine Erfassung eines Gewichts des Auffangbeutels oder des Auffangvolumens, durch eine Erfassung eines Öffnens eines Verschlusselements der Grundstruktur o. dgl. Die Erfassungseinheit umfasst zu einer Erfassung einer Füllmenge oder einer Entleerung vorzugsweise weitere Sensoren, wie beispielsweise ein Magnetsensor, der am Deckel angeordnet ist, einen NFC-Sensor o. dgl. Bevorzugt ist in Verbindung mit einer Laufzeitmessung der Handwerkzeugmaschine und einer Definition eines Typs der Handwerkzeugmaschine sowie insbesondere eine Betriebsinformationen der Handwerkzeugmaschine abschätzbar, wann eine maximale Füllmenge des Auffangbeutels oder des Auffangvolumens erreicht ist oder wann eine Entleerung des Auffangbeutels oder des Auffangvolumens erfolgen sollte. Vorzugsweise kann ein Bediener mittels der Ausgabeeinheit über ein bevorstehendes Erreichen einer maximalen Füllmenge des Auffangbeutels oder des Auffangvolumens oder eine bevorstehende Entleerung informiert werden.

Vorzugsweise ist mittels einer Auswertung von mittels der Erfassungseinheit der Staubauffangvorrichtung erfassten Daten und von Daten der Handwerkzeugmaschine prüfbar, ob die Handwerkzeugmaschine und die Staubauffangvorrichtung dieselben Bewegungen über einen bestimmten Zeitbereich erfahren. Es kann beispielsweise geprüft werden, ob bereits bei einem "in die Hand nehmen" der Handwerkzeugmaschine, insbesondere vor einer Inbetriebnahme der Handwerkzeugmaschine, die Handwerkzeugmaschine und die Staubauffangvorrichtung gemeinsam bewegt werden, insbesondere dieselben Bewegungskräfte erfahren. Ist beispielsweise erkennbar, dass die Handwerkzeugmaschine und die Staubauffangvorrichtung beispielsweise bei einem "in die Hand nehmen" der Handwerkzeugmaschine unterschiedliche Bewegungskräfte erfahren, kann eine Inbetriebnahme der Handwerkzeugmaschine unterbunden werden, insbesondere solange bis die Staubauffangvorrichtung korrekt an der Handwerkzeugmaschine angeordnet ist und insbesondere die Handwerkzeugmaschine und die Staubauffangvorrichtung gemeinsam bewegt werden, vorzugsweise gleiche Bewegungskräfte erfahren. Es ist denkbar, dass die Handwerkzeugmaschine nach einer Anordnung der Staubauffangvorrichtung an der Handwerkzeugmaschine zusammen mit der Staubauffangvorrichtung geschüttelt werden sollten, um einen Nachweis zu erbringen, dass die Handwerkzeugmaschine zusammen mit der Staubauffangvorrichtung bewegt wird oder ein Abgleich von Sensoren der Handwerkzeugmaschine und der Staubauffangvorrichtung erfolgen kann.

Mittels der erfindungsgemäßen Ausgestaltung kann vorteilhaft eine Übertragung von Daten zwischen der Staubauffangvorrichtung und der externen Einheit ermöglicht werden, die für einen sicheren Betrieb der Handwerkzeugmaschine sinnvoll sind. Es kann, insbesondere infolge einer Übertragung von Daten, vorteilhaft eine Überwachung einer korrekten Anordnung der Staubauffangvorrichtung an der Handwerkzeugmaschine ermöglicht werden. Es kann vorteilhaft eine hohe Sicherheit, insbesondere eine hohe Sicherheit gegen ein Einatmen von Staub, eines Bedieners einer Handwerkzeugmaschine, an der die erfindungsgemäße Staubauffangvorrichtung angeordnet ist, erreicht werden, insbesondere da vorteilhaft eine Überwachung einer Anordnung der Staubauffangvorrichtung an der Handwerkzeugmaschine ermöglicht werden kann. Es kann vorteilhaft eine Möglichkeit geschaffen werden, einen Bediener, insbesondere automatisch, darüber zu informieren, dass die Staubauffangvorrichtung inkorrekt an der Handwerkzeugmaschine angeordnet ist. Es kann vorteilhaft ein konstruktiv einfach gestaltetes zu einer Ermöglichung einer hohen Bedienersicherheit realisier werden.

Die Erfindung geht aus von einem Verfahren zu einem Betrieb eines Systems gemäß Anspruch 1. Es wird vorgeschlagen, dass in zumindest einem Verfahrensschritt in Abhängigkeit von einem Datenaustausch zwischen der abnehmbaren Staubauffangvorrichtung und der Handwerkzeugmaschine eine Betriebsbereitschaft der Handwerkzeugmaschine oder ein Betrieb der Handwerkzeugmaschine gesteuert oder geregelt wird. Die zuvor bereits zur Staubauffangvorrichtung und zum System offenbarten Merkmale sind analog auf das Verfahren zu lesen. Mittels der erfindungsgemäßen Ausgestaltung kann vorteilhaft eine Übertragung von Daten zwischen der Staubauffangvorrichtung und der externen Einheit ermöglicht werden, die für einen sicheren Betrieb der Handwerkzeugmaschine sinnvoll sind. Es kann, insbesondere infolge einer Übertragung von Daten, vorteilhaft eine Überwachung einer korrekten Anordnung der Staubauffangvorrichtung an der Handwerkzeugmaschine ermöglicht werden. Es kann vorteilhaft eine hohe Sicherheit, insbesondere eine hohe Sicherheit gegen ein Einatmen von Staub, eines Bedieners einer Handwerkzeugmaschine, an der die erfindungsgemäße Staubauffangvorrichtung angeordnet ist, erreicht werden, insbesondere da vorteilhaft eine Überwachung einer Anordnung der Staubauffangvorrichtung an der Handwerkzeugmaschine ermöglicht werden kann.

Es wird vorgeschlagen, dass in zumindest einem Verfahrensschritt ein Abgleich von zumindest einer Bewegungskenngröße, insbesondere einer Vibration, der Handwerkzeugmaschine mit zumindest einer Bewegungskenngröße, insbesondere einer Vibration, der abnehmbaren Staubauffangvorrichtung durchgeführt wird, insbesondere zu einer Freischaltung der Betriebsbereitschaft der Handwerkzeugmaschine oder zu einer Steuerung oder Regelung des Betriebs der Handwerkzeugmaschine. Mittels der erfindungsgemäßen Ausgestaltung kann vorteilhaft sichergestellt werden, dass eine erfindungsgemäße Staubauffangvorrichtung korrekt an der Handwerkzeugmaschine genutzt wird. Es kann vorteilhaft eine hohe Sicherheit, insbesondere eine hohe Sicherheit gegen ein Einatmen von Staub, eines Bedieners einer Handwerkzeugmaschine, an der die erfindungsgemäße Staubauffangvorrichtung angeordnet ist, erreicht werden, insbesondere da vorteilhaft eine Überwachung einer Anordnung der Staubauffangvorrichtung an der Handwerkzeugmaschine ermöglicht werden kann.

Zudem wird vorgeschlagen, dass in zumindest einem Verfahrensschritt zumindest eine Filterkenngröße einer Filtereinheit der Staubauffangvorrichtung, insbesondere ein Luftstrom durch die Filtereinheit, ausgewertet wird, insbesondere zu einer Freischaltung der Betriebsbereitschaft der Handwerkzeugmaschine oder zu einer Steuerung oder Regelung des Betriebs der Handwerkzeugmaschine. Mittels der erfindungsgemäßen Ausgestaltung kann vorteilhaft sichergestellt werden, dass eine erfindungsgemäße Staubauffangvorrichtung korrekt an der Handwerkzeugmaschine genutzt wird. Es kann vorteilhaft eine Absaugungseffizient der Handwerkzeugmaschine überwacht werden.

Des Weiteren wird vorgeschlagen, dass in zumindest einem Verfahrensschritt eine Zeitkenngröße zu einer Freischaltung der Betriebsbereitschaft der Handwerkzeugmaschine oder zu einer Steuerung oder Regelung des Betriebs der Handwerkzeugmaschine ausgewertet wird. Vorzugsweise wird eine Zeitkenngröße zu einer Freischaltung einer Betriebsbereitschaft der Handwerkzeugmaschine oder zu einer Steuerung oder Regelung eines Betriebs der Handwerkzeugmaschine ausgewertet. Beispielsweise ist es denkbar, dass eine Auswertung, insbesondere ein Vergleich von Daten der Handwerkzeugmaschine mit Daten der Erfassungseinheit der Staubauffangvorrichtung, innerhalb eines Zeitfensters von weniger als 30 s, insbesondere weniger als 10 s und besonders bevorzugt weniger als 5 s nach einer Inbetriebnahme der Handwerkzeugmaschine, insbesondere mittels der externen Einheit, erfolgt. Mittels der erfindungsgemäßen Ausgestaltung kann vorteilhaft sichergestellt werden, dass eine erfindungsgemäße Staubauffangvorrichtung korrekt an der Handwerkzeugmaschine genutzt wird. Es kann vorteilhaft eine hohe Sicherheit, insbesondere eine hohe Sicherheit gegen ein Einatmen von Staub, eines Bedieners einer Handwerkzeugmaschine, an der die erfindungsgemäße Staubauffangvorrichtung angeordnet ist, erreicht werden, insbesondere da vorteilhaft eine Überwachung einer Anordnung der Staubauffangvorrichtung an der Handwerkzeugmaschine ermöglicht werden kann.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße abnehmbare Staubauffangvorrichtung in einer schematischen Darstellung,
- Fig. 2: eine Schnittansicht eines Modulgehäuses der erfindungsgemäßen abnehmbaren Staubauffangvorrichtung in einer schematischen Darstellung,
- Fig. 3: ein erfindungsgemäßes System mit der erfindungsgemäßen abnehmbaren Staubauffangvorrichtung in einer schematischen Darstellung und
- Fig. 4: ein schematischer Ablauf eines erfindungsgemäßen Verfahrens zu einem Betrieb des erfindungsgemäßen Systems.

### Beschreibung des Ausführungsbeispiels

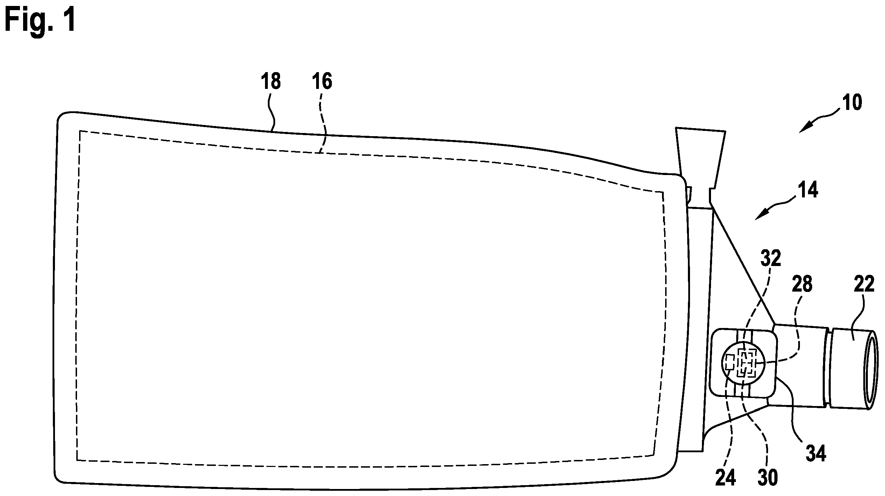

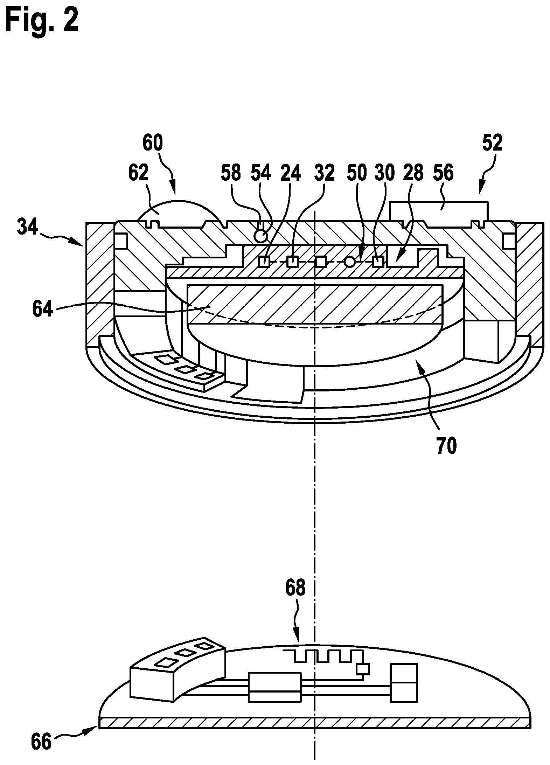

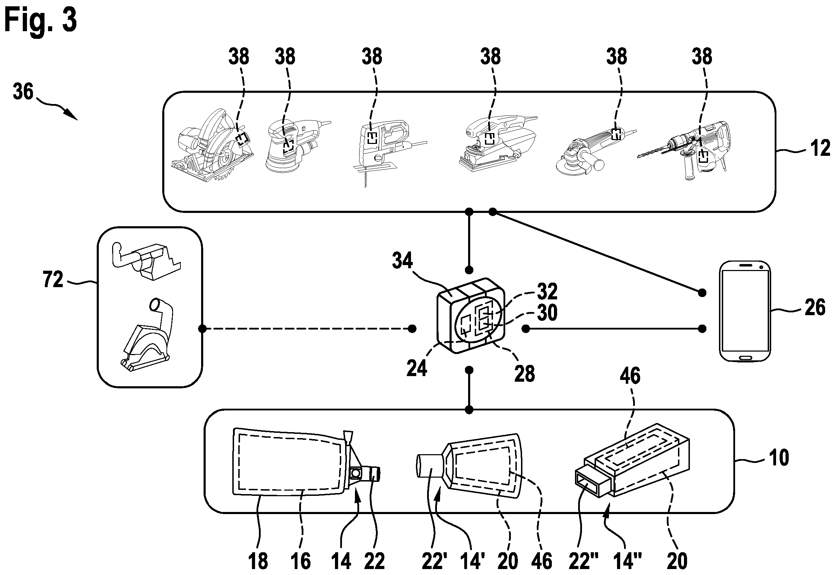

Figur 1 zeigt eine abnehmbare Staubauffangvorrichtung 10, insbesondere einen abnehmbaren Staubauffangbehälter, für eine Handwerkzeugmaschine 12 (vgl. Figur 3), mit zumindest einer Grundstruktur 14, die zumindest einen Rahmen 16 zu einer Aufnahme eines formvariablen Auffangbeutels 18 aufweist oder selbst zumindest teilweise ein Auffangvolumen 20 (vgl. Grundstruktur 14', 14" in Figur 3) begrenzt, wobei die Grundstruktur 14 zumindest einen Verbindungsstutzen 22 (vgl. Verbindungsstutzen 22' 22" in Figur 3) zu einer Verbindung mit einem Ausblasstutzen (hier nicht näher dargestellt) der Handwerkzeugmaschine 12 aufweist, mittels deren die Grundstruktur 14, insbesondere auf eine, einem Fachmann bekannte Art und Weise, abnehmbar an der Handwerkzeugmaschine 12 anordenbar ist. Bevorzugt umfasst die Staubauffangvorrichtung 10 in zumindest einer Ausgestaltung der Staubauffangvorrichtung 10 zumindest eine Filtereinheit 46 (vgl. Figur 3). Die Staubauffangvorrichtung 10 umfasst zumindest eine, insbesondere drahtlose, Kommunikationseinheit 24 (vgl. auch Figur 2) zu einem Austausch von, insbesondere elektronischen, Daten mit zumindest einer externen Einheit, insbesondere der Handwerkzeugmaschine 12 oder einem mobilen Kommunikationsgerät 26 (vgl. Figur 3). Beispielhaft ist das mobile Kommunikationsgerät 26 als Smartphone ausgebildet. Es ist jedoch auch denkbar, dass das mobile Kommunikationsgerät 26 eine andere, einem Fachmann als sinnvoll erscheinende Ausgestaltung aufweist, wie beispielsweise eine Ausgestaltung als Tablet, als PDA o. dgl.

Die Staubauffangvorrichtung 10 umfasst zumindest eine Erfassungseinheit 28 (vgl. Figur 2), die zumindest einen Bewegungssensor 30 zu einer Erfassung von zumindest einer Bewegungskenngröße, insbesondere einer Vibration, der Grundstruktur 14 aufweist, wobei die zumindest eine erfasste Bewegungskenngröße mittels der Kommunikationseinheit 24 an die zumindest eine externe Einheit übertragbar ist. Die zumindest eine Erfassungseinheit 28 umfasst vorzugsweise den zumindest einen Bewegungssensor 30 zu einer Erfassung von zumindest einer Bewegungskenngröße, insbesondere einer Vibration, der Grundstruktur 14, wobei die Kommunikationseinheit 24 und die Erfassungseinheit 28 in einem Nahbereich des Verbindungsstutzens 22 der Grundstruktur 14 angeordnet sind. Die zumindest eine Erfassungseinheit 28 umfasst bevorzugt zumindest einen Fluidstromsensor 32 zu einer Erfassung von zumindest einer Fluidkenngröße, der zu einer Erfassung eines durch den Verbindungsstutzen 22 strömenden Fluidstroms an dem Verbindungsstutzen 22 der Grundstruktur 14 angeordnet ist, wobei die zumindest eine erfasste Fluidkenngröße mittels der Kommunikationseinheit 24 an die zumindest eine externe Einheit übertragbar ist.

Die Staubauffangvorrichtung 10 umfasst bevorzugt zumindest ein, insbesondere abnehmbar an der Grundstruktur 14 angeordnetes, Modulgehäuse 34 (vgl. auch Figur 2) und zumindest die Erfassungseinheit 28, die zusammen mit der Kommunikationseinheit 24 in dem an der Grundstruktur 14 angeordneten Modulgehäuse 34 angeordnet ist.

Figur 2 zeigt einen Schnitt durch das Modulgehäuse 34. Die Staubauffangvorrichtung 10 umfasst bevorzugt eine Elektronikeinheit 50, die eine Steuer- und/oder Regeleinheit der Staubauffangvorrichtung 10 bildet. Die Elektronikeinheit 50 umfasst vorzugsweise eine Ausgabeeinheit 52. Die Ausgabeeinheit 52 umfasst insbesondere zumindest als Leuchtdioden ausgebildete Ausgabeelemente 54, 56. Es ist jedoch auch denkbar, dass die Ausgabeeinheit 52 alternativ oder zusätzlich zumindest ein Ausgabeelement aufweist, das als Display, als Lautsprecher, Minidisplay o. dgl. ausgebildet ist. Eine Lichtinformation des Ausgabeelements 54 wird vorzugsweise über einen Lichtleiter 58 der Ausgabeeinheit 52 auf eine Oberfläche des Modulgehäuses 34 geführt.

Die Elektronikeinheit 50 umfasst bevorzugt eine Eingabeeinheit 60. Bevorzugt ist die Erfassungseinheit 28 zumindest teilweise in die Elektronikeinheit 50 integriert. Die Eingabeeinheit 60 umfasst bevorzugt ein als Bedienknopf oder -schalter ausgebildetes Bedienelement 62. Es ist jedoch auch denkbar, dass die Eingabeeinheit 60 alternativ oder zusätzlich zumindest ein Bedienelement aufweist, das als berührungsempfindliches oder als näherungsempfindliches Bedienelement, LED-Drucktaster, -folien o. dgl. ausgebildet ist.

Vorzugsweise umfasst die Staubauffangvorrichtung 10 eine Energiespeichereinheit 64 zu einer Energieversorgung von elektrischen und/oder elektronischen Bauteilen der Staubauffangvorrichtung 10. Die Energiespeichereinheit 64 ist vorzugsweise im Modulgehäuse 34 angeordnet. Bevorzugt ist die Energiespeichereinheit 64 als wiederaufladbarer Akku ausgebildet. Bevorzugt ist die, insbesondere drahtlose, Kommunikationseinheit 24 zu einem drahtlosen Datenaustausch mit einer externen Einheit, insbesondere mit der Handwerkzeugmaschine 12, in dem Modulgehäuse 34 angeordnet.

Es ist denkbar, dass das Modulgehäuse 34 einen Aufnahmebereich 70 zu einer Aufnahme einer Erweiterungseinheit 66 der Staubauffangvorrichtung 10 umfasst. Die Erweiterungseinheit 66 umfasst vorzugsweise eine weitere Elektronikeinheit 68. Es ist auch denkbar, dass die Erweiterungseinheit 66 einen Energiespeicher umfasst. Die Erweiterungseinheit 66 ist bevorzugt mit der Elektronikeinheit 50 koppelbar ausgebildet. Die Erweiterungseinheit 66 ist zu einer Funktionserweiterung der Elektronikeinheit 50 vorgesehen.

Das Modulgehäuse 34 ist bevorzugt lösbar mit der Grundstruktur 14 verbunden. Alternativ ist denkbar, dass das Modulgehäuse 34 einteilig mit der Grundstruktur 14 ausgebildet ist und/oder unlösbar mit der Grundstruktur 14 verbunden ist.

Figur 3 zeigt ein System 36 mit zumindest der abnehmbaren Staubauffangvorrichtung 10 und mit zumindest einer Handwerkzeugmaschine 12, an der die Staubauffangvorrichtung 10 abnehmbar anordenbar ist, wobei die Handwerkzeugmaschine 12 zumindest eine, insbesondere drahtlose, Kommunikationseinheit 38 aufweist. In Figur 3 sind verschiedene Ausgestaltung einer Handwerkzeugmaschine 12 dargestellt, an der die Staubauffangvorrichtung 10 abnehmbar anordenbar ist. Zudem sind in Figur 3 im Hinblick auf eine Ausgestaltung der Grundstruktur 14, 14', 14" unterschiedlich ausgebildete Staubauffangvorrichtungen 10 dargestellt. Ferner ist das als Smartphone ausgebildete mobile Kommunikationsgerät 26 dargestellt. Das Modulgehäuse 34 kann alternativ mittels einer, einem Fachmann als sinnvoll erscheinenden Fixiereinheit an Zusatzmodulen 72 des Systems 36 angeordnet werden. Die Zusatzmodule 72 können beispielsweise als Schutzhauben, als Absaugvorrichtungen mit eigener Antriebseinheit o. dgl. ausgebildet sein. Vorzugsweise sind Daten, die mittels der Erfassungseinheit 28 der Staubauffangvorrichtung 10 erfassbar sind, mittels der Handwerkzeugmaschine 12 und mittels des mobilen Kommunikationsgeräts 26 verarbeitbar, insbesondere zu einer Steuerung oder Regelung eines Betriebs der Handwerkzeugmaschine 12.

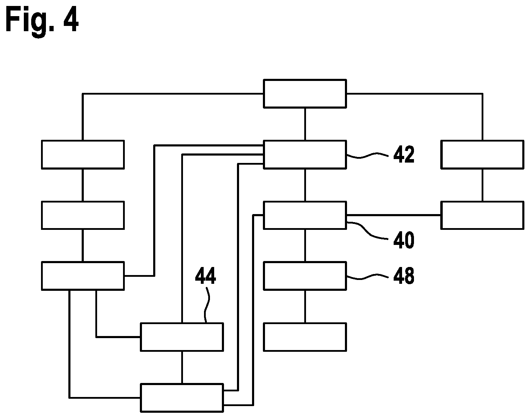

Figur 4 zeigt einen schematischen Ablauf eines Verfahrens zu einem Betrieb des Systems 36. In zumindest einem Verfahrensschritt 40 wird in Abhängigkeit von einem Datenaustausch zwischen der abnehmbaren Staubauffangvorrichtung 10 und der Handwerkzeugmaschine 12 eine Betriebsbereitschaft der Handwerkzeugmaschine 12 oder ein Betrieb der Handwerkzeugmaschine 12 gesteuert oder geregelt. In zumindest einem Verfahrensschritt 42 wird ein Abgleich von zumindest einer Bewegungskenngröße, insbesondere einer Vibration, der Handwerkzeugmaschine 12 mit zumindest einer Bewegungskenngröße, insbesondere einer Vibration, der abnehmbaren Staubauffangvorrichtung 10 durchgeführt, insbesondere zu einer Freischaltung der Betriebsbereitschaft der Handwerkzeugmaschine 12 oder zu einer Steuerung oder Regelung des Betriebs der Handwerkzeugmaschine 12. In zumindest einem Verfahrensschritt 44 wird zumindest eine Filterkenngröße einer Filtereinheit 46 der Staubauffangvorrichtung 10, insbesondere ein Luftstrom durch die Filtereinheit 46, ausgewertet, insbesondere zu einer Freischaltung der Betriebsbereitschaft der Handwerkzeugmaschine 12 oder zu einer Steuerung oder Regelung des Betriebs der Handwerkzeugmaschine 12. In zumindest einem Verfahrensschritt 48 wird eine Zeitkenngröße zu einer Freischaltung der Betriebsbereitschaft der Handwerkzeugmaschine 12 oder zu einer Steuerung oder Regelung des Betriebs der Handwerkzeugmaschine 12 ausgewertet.

Vorzugsweise kann eine Inbetriebnahme der Handwerkzeugmaschine 12 durch ein Betätigen eines Schalters (hier nicht näher dargestellt) der Handwerkzeugmaschine 12, ein Fließen von Strom, ein Drehen einer Elektromotoreinheit (hier nicht näher dargestellt) der Handwerkzeugmaschine 12, ein Erfassen von Vibrationen der Handwerkzeugmaschine 12 erkannt werden. Insbesondere die Vibrationen der Handwerkzeugmaschine 12 werden auf mit der Handwerkzeugmaschine 12 verbundene Vorrichtungen/Einheiten/Elemente, wie beispielsweise auf die mit der Handwerkzeugmaschine 12 verbundene Staubauffangvorrichtung 10, übertragen. Die Erfassungseinheit 28 der Staubauffangvorrichtung 10 kann insbesondere diese übertragenen Vibrationen erfassen. Vorzugsweise können erfasste Vibrationen mittels der Kommunikationseinheit 24 der Staubauffangvorrichtung 10 an die externe Einheit, insbesondere an die Handwerkzeugmaschine 12 oder das mobile Kommunikationsgerät 26, insbesondere das Smartphone, übertragen werden. Es ist denkbar, dass eine Elektronikeinheit der externen Einheit, insbesondere der Handwerkzeugmaschine 12 und/oder des mobilen Kommunikationsgeräts 26, die mittels der Erfassungseinheit 28 der Staubauffangvorrichtung 10 erfassten Vibrationen auswertet, um zu vergleichen, ob die Staubauffangvorrichtung 10 analog zur Handwerkzeugmaschine 12 vibriert. Vorzugsweise ist eine Steuerung oder Regelung der Elektromotoreinheit der der Handwerkzeugmaschine 12 abhängig von einem Vergleich der Vibrationen der Handwerkzeugmaschine 12 und den Vibrationen der Staubauffangvorrichtung 10. Wird beispielsweise erkannt, dass die Staubauffangvorrichtung 10 analoge Vibrationen erfährt wie die Handwerkzeugmaschine 12, kann vorzugsweise erkannt werden, dass die Staubauffangvorrichtung 10 an der Handwerkzeugmaschine 12 angeordnet ist. Es kann ein Betrieb der Handwerkzeugmaschine 12 fortgesetzt werden. Wird beispielsweise erkannt, dass die Staubauffangvorrichtung 10 eine Vibrationen erfährt oder unterschiedliche Vibrationen erfährt wie die Handwerkzeugmaschine 12, kann vorzugsweise erkannt werden, dass die Staubauffangvorrichtung 10 entkoppelt von der Handwerkzeugmaschine 12 angeordnet ist. Es kann ein Betrieb der Handwerkzeugmaschine 12 unterbrochen werden. Beispielsweise ist auch denkbar, dass eine Inbetriebnahme der Handwerkzeugmaschine 12 in Abhängigkeit von einer Abweichung von einem Grenzwert von verglichenen Daten unterbunden wird oder dass bei einem Nichtvorliegen von Daten der Staubauffangvorrichtung 10 eine Anzahl von Inbetriebnahmen der Handwerkzeugmaschine 12 begrenzt wird. Eine Begrenzung einer Anzahl von Inbetriebnahmen der Handwerkzeugmaschine 12 kann beispielsweise durch ein Ablaufen eines internen Timers zurückgesetzt oder aufgehoben werden oder durch einen Administrator zurückgesetzt oder aufgehoben werden. Beispielsweise ist es denkbar, dass nach Ablaufen eines Timers von zwölf Stunden o. dgl. eine Begrenzung einer Anzahl von Inbetriebnahmen der Handwerkzeugmaschine 12 zurückgesetzt oder aufgehoben wird. Vorzugsweise umfasst die Handwerkzeugmaschine 12 oder das mobile Kommunikationsgerät 26 zumindest eine optische, akustische und/oder haptische Ausgabeeinheit (hier nicht näher dargestellt), wie beispielsweise ein Display, ein Lautsprecher, eine Vibrationseinheit o. dgl., die dazu vorgesehen ist, in Abhängigkeit von den übertragenen, insbesondere elektronischen, Daten, eine Information an einen Bediener auszugeben. Beispielsweise ist denkbar, dass ein Bediener mittels der Ausgabeeinheit darauf aufmerksam gemacht werden kann, dass die Staubauffangvorrichtung 10 nicht an der Handwerkzeugmaschine 12 angeordnet ist. Des Weiteren umfasst die Handwerkzeugmaschine 12 oder das mobile Kommunikationsgerät 26 vorzugsweise zumindest eine Eingabeeinheit (hier nicht näher dargestellt) zu einer Eingabe von Bedienerbefehlen. Die Eingabeeinheit kann einteilig mit der Ausgabeeinheit ausgebildet sein, insbesondere bei einer Ausbildung der Eingabeeinheit als berührungsempfindliches Display o. dgl. Mittels der Eingabeeinheit kann beispielsweise einem Bediener die Möglichkeit gegeben werden, über eine Over-Write Funktion die Handwerkzeugmaschine 12 bei einem Unterbleiben einer Übertragung von Daten oder bei einer Abweichung eines Vergleichs von Daten für eine bestimmte Zeit zu betreiben. Insbesondere ist die Over-Write Funktion in einem Gerätespeicher (hier nicht näher dargestellt) der Handwerkzeugmaschine 12 oder in einer Datenbank gespeichert oder speicherbar und kann mit weitern Daten wie beispielsweise einer Bediener-ID, einem Datum, einer Zeit, einem Ort verknüpft und/oder abgeglichen werden, wobei eine Freigabe in Abhängigkeit von einer Kombination der oben genannten Daten erfolgen kann. Die Over-Write Funktion kann an bestimmte Berechtigungen gekoppelt sein, so dass nur bestimmte Bediener diese Funktion abrufen können.

Ferner ist es auch denkbar, dass mittels der Erfassungseinheit 28 der Staubauffangvorrichtung 10 eine Füllmenge oder eine Entleerung des Auffangbeutels 18 oder des Auffangvolumens 20 erfassbar ist, wie beispielsweise durch eine Erfassung eines Gewichts des Auffangbeutels 18 oder des Auffangvolumens 20, durch eine Erfassung eines Öffnens eines Verschlusselements (hier nicht näher dargestellt) der Grundstruktur 14, 14', 14" o. dgl. Die Erfassungseinheit 28 umfasst zu einer Erfassung einer Füllmenge oder einer Entleerung vorzugsweise weitere Sensoren (hier nicht näher dargestellt), wie beispielsweise ein Magnetsensor, der am Deckel angeordnet ist, einen NFC-Sensor o. dgl. Bevorzugt ist in Verbindung mit einer Laufzeitmessung der Handwerkzeugmaschine 12 und einer Definition eines Typs der Handwerkzeugmaschine 12 sowie insbesondere eine Betriebsinformationen der Handwerkzeugmaschine 12 abschätzbar, wann eine maximale Füllmenge des Auffangbeutels 18 oder des Auffangvolumens 20 erreicht ist oder wann eine Entleerung des Auffangbeutels 18 oder des Auffangvolumens 20 erfolgen sollte. Vorzugsweise kann ein Bediener mittels der Ausgabeeinheit über ein bevorstehendes Erreichen einer maximalen Füllmenge des Auffangbeutels 18 oder des Auffangvolumens 20 oder eine bevorstehende Entleerung informiert werden.

Vorzugsweise ist mittels einer Auswertung von mittels der Erfassungseinheit 28 der Staubauffangvorrichtung 10 erfassten Daten und von Daten der Handwerkzeugmaschine 12 prüfbar, ob die Handwerkzeugmaschine 12 und die Staubauffangvorrichtung 10 dieselben Bewegungen über einen bestimmten Zeitbereich erfahren. Es kann beispielsweise geprüft werden, ob bereits bei einem "in die Hand nehmen" der Handwerkzeugmaschine 12, insbesondere vor einer Inbetriebnahme der Handwerkzeugmaschine 12, die Handwerkzeugmaschine 12 und die Staubauffangvorrichtung 10 gemeinsam bewegt werden, insbesondere dieselben Bewegungskräfte erfahren. Ist beispielsweise erkennbar, dass die Handwerkzeugmaschine 12 und die Staubauffangvorrichtung 10 beispielsweise bei einem "in die Hand nehmen" der Handwerkzeugmaschine 12 unterschiedliche Bewegungskräfte erfahren, kann eine Inbetriebnahme der Handwerkzeugmaschine 12 unterbunden werden, insbesondere solange bis die Staubauffangvorrichtung 10 korrekt an der Handwerkzeugmaschine 12 angeordnet ist und insbesondere die Handwerkzeugmaschine 12 und die Staubauffangvorrichtung 10 gemeinsam bewegt werden, vorzugsweise gleiche Bewegungskräfte erfahren. Es ist denkbar, dass die Handwerkzeugmaschine 12 nach einer Anordnung der Staubauffangvorrichtung 10 an der Handwerkzeugmaschine 12 zusammen mit der Staubauffangvorrichtung 10 geschüttelt werden sollten, um einen Nachweis zu erbringen, dass die Handwerkzeugmaschine 12 zusammen mit der Staubauffangvorrichtung 10 bewegt wird oder ein Abgleich von Sensoren der Handwerkzeugmaschine 12 und der Staubauffangvorrichtung 10 erfolgen kann.

## Patentansprüche

1. Verfahren zu einem Betrieb eines Systems mit zumindest einer abnehmbaren Staubauffangvorrichtung für eine Handwerkzeugmaschine (12) aufweisend zumindest eine Grundstruktur (14; 14'; 14"), die zumindest einen Rahmen (16) zu einer Aufnahme eines formvariablen Auffangbeutels (18) aufweist oder selbst zumindest teilweise ein Auffangvolumen (20) begrenzt, wobei die Grundstruktur (14; 14'; 14") zumindest einen Verbindungsstutzen (22; 22'; 22") zu einer Verbindung mit einem Ausblasstutzen der Handwerkzeugmaschine (12) aufweist, mittels deren die Grundstruktur (14; 14'; 14") abnehmbar an der Handwerkzeugmaschine (12) anordenbar ist, aufweisend zumindest eine, insbesondere drahtlose, Kommunikationseinheit (24) zu einem Austausch von, insbesondere elektronischen, Daten mit zumindest einer externen Einheit, insbesondere der Handwerkzeugmaschine (12) oder einem mobilen Kommunikationsgerät (26) wobei die Staufbauffangvorrichtung weiter aufweist zumindest eine Erfassungseinheit (28) zur Erfassung von Vibrationen und sowie mit zumindest einer Handwerkzeugmaschine (12), an der die Staubauffangvorrichtung abnehmbar anordenbar ist, wobei die Handwerkzeugmaschine (12) zumindest eine, insbesondere drahtlose, Kommunikationseinheit (38) aufweist, wobei in zumindest einem Verfahrensschritt (40) in Abhängigkeit von einem Datenaustausch zwischen der abnehmbaren Staubauffangvorrichtung und der Handwerkzeugmaschine (12) ein Betrieb der Handwerkzeugmaschine (12) gesteuert oder geregelt wird, wobei in zumindest einem Verfahrensschritt (42) ein Abgleich von zumindest einer Vibration der Handwerkzeugmaschine (12) mit zumindest einer Vibration der abnehmbaren Staubauffangvorrichtung durchgeführt wird, zu einer Steuerung oder Regelung des Betriebs der Handwerkzeugmaschine (12) **dadurch gekennzeichnet, dass** eine Steuerung oder Regelung des Betriebs der Handwerkzeugmaschine (12) abhängig von einem Vergleich der Vibrationen der Handwerkzeugmaschine (12) und den Vibrationen der Staubauffangvorrichtung (10) ist, wobei bei Erkennen, dass die Staubauffangvorrichtung (10) analoge Vibrationen erfährt wie die Handwerkzeugmaschine (12), erkannt werden kann, dass die Staubauffangvorrichtung (10) an der Handwerkzeugmaschine (12) angeordnet ist und damit ein Betrieb der Handwerkzeugmaschine (12) fortgesetzt werden kann, wobei bei Erkennen, dass die Staubauffangvorrichtung (10) unterschiedliche Vibrationen erfährt wie die Handwerkzeugmaschine (12), erkannt werden kann, dass die Staubauffangvorrichtung (10) entkoppelt von der Handwerkzeugmaschine (12) angeordnet ist und ein Betrieb der Handwerkzeugmaschine (12) unterbrochen wird.

2. Verfahren nach Anspruch 1, **dadurch gekennzeichnet, dass** in zumindest einem Verfahrensschritt (44) zumindest eine Filterkenngröße einer Filtereinheit (46) der Staubauffangvorrichtung, insbesondere ein Luftstrom durch die Filtereinheit (46), ausgewertet wird, insbesondere zu einer Freischaltung der Betriebsbereitschaft der Handwerkzeugmaschine (12) oder zu einer Steuerung oder Regelung des Betriebs der Handwerkzeugmaschine (12).

3. Verfahren nach einem der Ansprüche 1 oder 2, **dadurch gekennzeichnet, dass** in zumindest einem Verfahrensschritt (48) eine Zeitkenngröße zu einer Freischaltung der Betriebsbereitschaft der Handwerkzeugmaschine (12) oder zu einer Steuerung oder Regelung des Betriebs der Handwerkzeugmaschine (12) ausgewertet wird.

## Claims

1. Method for operating a system which has at least one removable dust-collection device for a hand-held power tool (12), said dust-collection device having at least one base structure (14; 14'; 14") which has at least one frame (16) for receiving a collection bag (18) of variable shape or which itself at least partially delimits a collection volume (20), wherein the base structure (14; 14'; 14") has at least one connecting connector (22; 22'; 22") for connection to a blow-out connector of the hand-held power tool (12), by means of which the base structure (14; 14'; 14") is removably arrangeable on the hand-held power tool (12), having at least one, in particular wireless, communication unit (24) for exchange of, in particular electronic, data with at least one external unit, in particular the hand-held power tool (12) or a mobile communication device (26), the dust-collection device further having at least one detection unit (28) for detecting vibrations, and which also has at least one hand-held power tool (12) on which the dust-collection device is removably arrangeable, wherein the hand-held power tool (12) has at least one, in particular wireless, communication unit (38), wherein, in at least one method step (40), operation of the hand-held power tool (12) is controlled or regulated according to an exchange of data between the removable dust-collection device and the hand-held power tool (12), wherein, in at least one method step (42), a comparison of at least one vibration of the hand-held power tool (12) with at least one vibration of the removable dust-collection device is made for control or regulation of the operation of the hand-held power tool (12), **characterized in that** control or regulation of the operation of the hand-held power tool (12) is dependent on a comparison of the vibrations of the hand-held power tool (12) and the vibrations of the dust-collection device (10), wherein, if it is identified that the dust-collection device (10) experiences vibrations analogous to those of the hand-held power tool (12), it can be identified that the dust-collection device (10) is arranged on the hand-held power tool (12) and thus operation of the hand-held power tool (12) can be continued, wherein, if it is identified that the dust-collection device (10) experiences vibrations different to those of the hand-held power tool (12), it can be identified that the dust-collection device (10) is arranged decoupled from the hand-held power tool (12) and operation of the hand-held power tool (12) is interrupted.

2. Method according to Claim 1, **characterized in that**, in at least one method step (44), at least one filter characteristic variable of a filter unit (46) of the dust-collection device, in particular an air flow through the filter unit (46), is evaluated, in particular for enabling of the operational readiness of the hand-held power tool (12) or for control or regulation of the operation of the hand-held power tool (12).

3. Method according to either of Claims 1 and 2, **characterized in that**, in at least one method step (48), a time characteristic variable is evaluated for enabling of the operational readiness of the hand-held power tool (12) or for control or regulation of the operation of the hand-held power tool (12).

## Revendications

1. Procédé de fonctionnement d'un système comprenant au moins un dispositif collecteur de poussière amovible pour une machine-outil à main (12), comprenant au moins une structure de base (14 ; 14' ; 14"), qui présente au moins un cadre (16) pour la réception d'un sac collecteur (18) variable dans sa forme ou qui délimite lui-même au moins partiellement un volume collecteur (20), la structure de base (14 ; 14' ; 14") présentant au moins une pièce de raccordement (22 ; 22' ; 22") pour le raccordement à une embouchure de sortie de la machine-outil à main (12), au moyen de laquelle la structure de base (14 ; 14' ; 14") peut être disposée de manière amovible sur la machine-outil à main (12), comprenant au moins une unité de communication (24), en particulier sans fil, pour un échange de données, en particulier électroniques, avec au moins une unité externe, en particulier la machine-outil à main (12) ou un appareil de communication mobile (26), le dispositif collecteur de poussière comprenant en outre au moins une unité de détection (28) pour la détection de vibrations, et comportant en outre au moins une machine-outil à main (12) sur laquelle le dispositif collecteur de poussière peut être disposé de manière amovible, la machine-outil à main (12) comprenant au moins une unité de communication (38), en particulier sans fil, un fonctionnement de la machine-outil à main (12) étant commandé ou régulé lors d'au moins une étape de procédé (40) en fonction d'un échange de données entre le dispositif collecteur de poussière amovible et la machine-outil à main (12), une égalisation d'au moins une vibration de la machine-outil à main (12) avec au moins une vibration du dispositif collecteur de poussière amovible étant réalisée lors d'au moins une étape de procédé (42), à des fins de commande ou de régulation du fonctionnement de la machine-outil à main (12), **caractérisé en ce qu'**une commande ou une régulation du fonctionnement de la machine-outil à main (12) dépendant d'une comparaison des vibrations de la machine-outil à main (12) avec les vibrations du dispositif collecteur de poussière (10), dans lequel, lorsqu'il est détecté que le dispositif collecteur de poussière (10) subit des vibrations analogues à celles de la machine-outil à main (12), il peut être détecté que le dispositif collecteur de poussière (10) est disposé sur la machine-outil à main (12) et qu'ainsi un fonctionnement de la machine-outil à main (12) peut être poursuivi, dans lequel, lorsqu'il est détecté que le dispositif collecteur de poussière (10) subit des vibrations différentes de celles de la machine-outil à main (12), il peut être détecté que le dispositif collecteur de poussière (10) est disposé de manière découplée de la machine-outil à main (12) et qu'un fonctionnement de la machine-outil à main (12) est interrompu.

2. Procédé selon la revendication 1, **caractérisé en ce que**, lors d'au moins une étape de procédé (44), au moins une grandeur caractéristique de filtre d'une unité de filtre (46) du dispositif collecteur de poussière, en particulier un flux d'air à travers l'unité de filtre (46), est évaluée, en particulier pour une activation de l'état de fonctionnement de la machine-outil à main (12) ou pour une commande ou une régulation du fonctionnement de la machine-outil à main (12).

3. Procédé selon l'une des revendications 1 ou 2, **caractérisé en ce que**, lors d'au moins une étape de procédé (48), une grandeur caractéristique temporelle est évaluée pour une activation de l'état de fonctionnement de la machine-outil à main (12) ou pour une commande ou une régulation du fonctionnement de la machine-outil à main (12).
